# EUROPÄISCHE PATENTSCHRIFT

(11) **EP 3 703 319 B1**
(45) Veröffentlichungstag und Bekanntmachung des Hinweises auf die Patenterteilung: **29.09.2021**
(21) Anmeldenummer: 20154029.1
(22) Anmeldetag: 28.01.2020
(51) Int. Cl.: H04L 12/46

(54) **VERFAHREN ZUM ZUORDNEN VON SIGNALEN ZU VERSCHIEDENEN KOMPONENTEN, COMPUTERPROGRAMM UND COMPUTERLESBARES SPEICHERMEDIUM**
METHOD FOR ALLOCATING SIGNALS TO DIFFERENT COMPONENTS, COMPUTER PROGRAM AND COMPUTER READABLE STORAGE MEDIUM
PROCÉDÉ D'ATTRIBUTION DE SIGNAUX À DIFFÉRENTS COMPOSANTS, PROGRAMME INFORMATIQUE ET SUPPORT D'ENREGISTREMENT LISIBLE PAR ORDINATEUR

(30) Priorität: 28.02.2019 DE 102019202714
(43) Veröffentlichungstag der Anmeldung: 02.09.2020
(73) Patentinhaber: Siemens Mobility GmbH, 81739 München (DE); Deutsche Bahn AG, 10785 Berlin (DE)
(72) Erfinder: Aufderheide, Helge, 80634 München (DE); Richter, Phillipp, 50676 Köln (DE)
(74) Vertreter: Deffner, Rolf

(56) Entgegenhaltungen:
- EP-A1- 3 109 801
- WO-A1-2004/056263
- DE-A1-102008 047 217
- DE-T5-112006 002 153

## Beschreibung

DE 11 2006 002153 T5 offenbart ein Verfahren zum Überwachen einer Anlage, wobei für jeden Zustand einer Komponente ein Datenstrang erzeugt wird.

Die Erfindung betrifft ein Verfahren zum Zuordnen von Signalen zu verschiedenen Komponenten, wobei sich die Signale in einem Datenstrang überlagern.

Insbesondere im Bereich des Schienenverkehrs ist es möglich, dass Signale mehrere Komponenten über einen gemeinsamen Bus übermittelt werden. Dann überlagern sich die Signale mehrerer Komponenten in einem Datenstrang. Es kann vorkommen, dass nicht unmittelbar ersichtlich ist, wann welche Komponente ihre Daten übermittelt hat.

In diesem Fall ist die Datenverarbeitung aufwändig, weil eine manuelle Untergliederung des Datenstrangs in mehrere Signale und eine manuelle Zuordnung der Signale zu den Komponenten erfolgen muss. Außerdem kann die Datenverarbeitung schwierig sein, weil eine Zuordnung der Signale zu den Komponenten für den Auswertenden nicht immer klar erkennbar ist.

Eine Aufgabe der Erfindung ist es, ein Verfahren anzugeben, mittels welchem sich einzelne Signale, die sich in einem Datenstrang überlagern, zu verschiedenen Komponenten zuordnen lassen.

Die Aufgabe wird gelöst durch ein Verfahren der eingangs genannten Art, bei dem erfindungsgemäß innerhalb des Datenstrangs mehrere Änderungspunkte ermittelt werden. Weiter wird für jeden Änderungspunkt jeweils ein Änderungsverhalten ermittelt. Diejenigen Änderungspunkte, bei welchen ein ähnliches Änderungsverhalten ermittelt wird, werden jeweils einer gemeinsamen Gruppe zugeordnet. Ferner wird für jede Gruppe von Änderungspunkten jeweils ein Auslöser für das jeweilige Änderungsverhalten ermittelt. Der Datenstrang wird mittels der Änderungspunkte in mehrere Abschnitte unterteilt, wobei unter Verwendung der ermittelten Auslöser jeder Abschnitt jeweils zu einer Komponente zugeordnet wird. Die zu jeweils einer Komponente zugeordneten Abschnitte bilden jeweils ein Signal.

Das erfindungsgemäße Verfahren kann automatisch, insbesondere vollautomatisch oder teilautomatisch, durchgeführt werden.

Insbesondere kann das erfindungsgemäße Verfahren besonders zeiteffizient sein. Weiter kann das Verfahren besonders aufwandsgünstig sein.

Als Änderungspunkt kann ein Punkt aufgefasst werden, bei dem in dem Datenstrang eine signifikante Änderung stattfindet.

Es ist zweckmäßig, wenn der Datenstrang zumindest eine Datenreihe für eine Variable aufweist.

Zweckmäßigerweise ist zwischen zwei Änderungspunkten jeweils ein Abschnitt des Datenstrangs angeordnet. Zweckmäßigerweise bilden die zu jeweils einer Komponente zugeordneten Abschnitte jeweils ein der Komponente zugeordnetes Signal.

Bei dem Änderungspunkt findet vorzugsweise in der zumindest einen Datenreihe eine signifikante Änderung statt. Falls der Datenstrang mehrere Datenreihen umfasst, findet bei dem Änderungspunkt vorzugsweise in zumindest einer der Datenreihen eine signifikante Änderung statt.

Die zumindest eine Datenreihe kann vor der Ermittlung der Änderungspunkte vorverarbeitet werden. Beispielsweise kann die zumindest eine Datenreihe vor der Ermittlung der Änderungspunkte gefiltert werden.

Bei der Ermittlung der Änderungspunkte werden vorteilhafterweise Abweichungen von einem üblichen Verhalten der Variable(n) ermittelt.

Beispielsweise können bei der Ermittlung der Änderungspunkte für jede Datenreihe die jeweiligen Abweichungen von einem üblichen Verhalten der jeweiligen Variable ermittelt werden.

Das übliche Verhalten einer Variable kann definiert werden/sein. Weiter kann das übliche Verhalten einer Variable anhand von Langzeitanalysen ermittelt werden/worden sein. Beispielsweise kann das übliche Verhalten eine übliche Steigung (vorzugsweise als Bereich), eine übliche Änderungsrate (vorzugsweise als Bereich), einen üblichen Änderungswert (vorzugsweise als Bereich) und/oder einen üblichen Wertebereich umfassen.

Diejenigen Änderungspunkte, bei welchen ein ähnliches Änderungsverhalten ermittelt wird, können beispielsweise mittels eines Clusteranalyseverfahrens jeweils einer gemeinsamen Gruppe zugeordnet werden.

Wie zuvor beschrieben, wird für jede Gruppe von Änderungspunkten jeweils ein Auslöser für das jeweilige Änderungsverhalten ermittelt.

Als Auslöser für das jeweilige Änderungsverhalten kann ein Umschalten zwischen den Komponenten ermittelt werden. Weiter kann als Auslöser für das jeweilige Änderungsverhalten ein Austauschen zumindest einer der Komponenten ermittelt werden. Außerdem kann als Auslöser für das jeweilige Änderungsverhalten ein Rauschen einer der Komponenten ermittelt werden. Ferner kann als Auslöser für das jeweilige Änderungsverhalten ein Ausfall einer der Komponenten ermittelt werden. Es können weitere Auslöser für das jeweilige Änderungsverhalten ermittelt werden.

Es ist zweckmäßig, wenn beim Umschalten zwischen den Komponenten als Auslöser zumindest zwischen einem Umschalten von einer ersten der Komponenten zu einer zweiten der Komponenten und einem Umschalten von der zweiten der Komponenten zu der ersten der Komponenten unterschieden wird.

Das heißt, falls als Auslöser für das jeweilige Änderungsverhalten ein Umschalten zwischen den Komponenten ermittelt wird, dann wird zweckmäßigerweise zumindest zwischen einem Umschalten von einer ersten der Komponenten zu einer zweiten der Komponenten und einem Umschalten von der zweiten der Komponenten zu der ersten der Komponenten unterschieden.

Unter Verwendung der ermittelten Auslöser wird, wie zuvor erwähnt, jeder Abschnitt zwischen zwei Änderungspunkten jeweils zu einer Komponente zugeordnet.

Je nach ermittelten Auslöser für das jeweilige Änderungsverhalten des jeweiligen Änderungspunkts können aufeinanderfolgende Abschnitte derselben Komponente oder verschiedenen Komponenten zugeordnet werden. Weiter ist es möglich, dass ein Abschnitt nicht zu einer Komponente zugeordnet wird.

Wenn als Auslöser für das Änderungsverhalten eines Änderungspunkts ein Umschalten zwischen den Komponenten ermittelt wird - kurz: wenn der Änderungspunkt ein Umschaltpunkt ist -, dann wird dem Abschnitt nach diesem Änderungspunkt zweckmäßigerweise eine andere Komponente zugeordnet als dem Abschnitt vor diesem Änderungspunkt.

Wenn als Auslöser für das Änderungsverhalten eines Änderungspunkts ein Austauschen zumindest einer der Komponenten ermittelt wird, wird dem Abschnitt nach diesem Änderungspunkt vorzugsweise eine andere Komponente zugeordnet als dem Abschnitt vor diesem Änderungspunkt.

Wenn als Auslöser für das Änderungsverhalten eines Änderungspunkts ein Rauschen einer der Komponenten zugeordnet wird, dann wird dem Abschnitt nach diesem Änderungspunkt vorzugsweise dieselbe Komponente zugeordnet wie dem Abschnitt vor diesem Änderungspunkt.

Wenn als Auslöser für das Änderungsverhalten eines Änderungspunkts ein Ausfall einer der Komponenten zugeordnet wird, dann kann dem Abschnitt nach diesem Änderungspunkt vorzugsweise dieselbe Komponente zugeordnet werden wie dem Abschnitt vor diesem Änderungspunkt. Wenn als Auslöser für das Änderungsverhalten eines Änderungspunkts ein Ausfall einer der Komponenten zugeordnet wird, dann ist es ferner möglich, dass dem Abschnitt nach diesem Änderungspunkt keine Komponente zugeordnet wird.

Wie zuvor genannt, bilden die zu einer Komponente zugeordneten Abschnitte jeweils ein Signal.

Vorzugsweise wird für jede Komponente das jeweilige Signal ausgegeben.

In einer bevorzugten Ausgestaltung der Erfindung weist der Datenstrang mehrere Datenreihen jeweils für eine Variable auf.

Vor der Ermittlung der Änderungspunkte kann ein jeweiliges Format der Datenreihen unter Verwendung einer Abtastratenkonvertierung, auch Resampling genannt, vereinheitlicht werden. Auf diese Weise kann jede der Datenreihen in ein einheitliches Format gebracht werden.

Beispielsweise kann bei der Vereinheitlichung des jeweiligen Formats jede Datenreihe gleich viele Einträge erhalten.

Zur Ermittlung des Änderungsverhaltens kann für jeden Änderungspunkt jeweils ein Änderungsvektor bestimmt werden. Vorzugsweise beschreibt der Änderungsvektor jeweils eine Änderung jeder Datenreihe an der jeweiligen Position im Datenstrang. Insbesondere kann der Änderungsvektor jeweils eine Änderung jeder Datenreihe an der jeweiligen Zeitstelle im Datenstrang beschreiben.

Beispielsweise kann der Änderungsvektor mehrere Vektoreinträge aufweisen, wobei vorzugsweise jeder der Vektoreinträge jeweils eine Änderung einer jeweiligen Datenreihe an der jeweiligen Position im Datenstrang beschreibt.

Für jede Variable jeder Komponente kann jeweils ein Teil-Signal ausgegeben werden. Die Teil-Signale einer jeweiligen Komponente bilden vorzugsweise jeweils das zu der jeweiligen Komponente zugeordnete Signal.

Bei der Zuordnung der Abschnitte zwischen den Änderungspunkten zu den Komponenten kann eine Plausibilitätsprüfung erfolgen. Vorzugsweise wird bei der Plausibilitätsprüfung geprüft, ob das Umschalten zwischen den Komponenten plausibel ist.

Beispielsweise kann die Plausibilitätsprüfung positiv abgeschlossen werden, wenn nach einem Umschalten von einer ersten Komponente auf eine zweite Komponente vor einem nochmaligen Umschalten von der ersten Komponente auf die zweite Komponente erst ein Umschalten zurück zu der ersten Komponente stattfindet. Ein wiederholtes Umschalten von der ersten Komponente auf die zweite Komponente ohne ein Umschalten zurück zu der ersten Komponente kann dagegen als nicht plausibel erkannt werden.

Die Plausibilitätsprüfung kann insbesondere dann, wenn sich die Signale von mehr als zwei Komponenten in einem Datenstrang überlagern, vorteilhaft sein.

Die Signale der verschiedenen Komponenten können beispielsweise Signale mehrerer Komponenten eines Schienenfahrzeugs sein.

Weiter können die zu den verschiedenen Komponenten zugeordneten Signale zur Analyse eines Verhaltens zumindest einer der Komponenten verwendet werden.

Bei der Analyse kann erkannt werden, ob sich die jeweilige Komponente normal oder anormal verhält. Weiter kann bei der Analyse ein Defekt der zumindest einen Komponente erkannt werden. Ferner kann bei der Analyse eine zu erwartende Lebensdauer der zumindest einen Komponente ermittelt werden. Weitere Varianten sind möglich.

Zweckmäßigerweise wird das Verfahren zumindest teilautomatisch durchgeführt. Es ist vorteilhaft, wenn das Verfahren vollautomatisch durchgeführt wird.

Ferner ist die Erfindung gerichtet auf ein Computerprogramm mit Befehlen, welche, wenn das Computerprogramm auf einem Computer ausgeführt wird, diesen veranlasst, das zuvor genannte Verfahren auszuführen.

Weiter ist die Erfindung gerichtet auf ein computerlesbares Speichermedium mit Befehlen, welche, wenn sie durch einen Computer ausgeführt werden, diesen Computer veranlassen, das zuvor genannte Verfahren auszuführen.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren, der erfindungsgemäßen Verwendung, dem erfindungsgemäßen Computerprogramm und dem erfindungsgemäßen computerlesbaren Speichermedium kombinierbar. So sind Verfahrensmerkmale auch als Eigenschaft der entsprechenden Vorrichtungseinheit gegenständlich formuliert zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: ein Flussdiagramm zur Beschreibung eines Verfahrens zum Zuordnen von Signalen zu verschiedenen Komponenten,
- FIG 2: ein Diagramm, in welchem ein Datenstrang mit mehreren Datenreihen dargestellt ist, und
- FIG 3: ein Diagramm, in welchem der Datenstrang aus FIG 2 dargestellt ist, wobei Abschnitte des Datenstrangs mehreren Komponenten zugeordnet wurden.

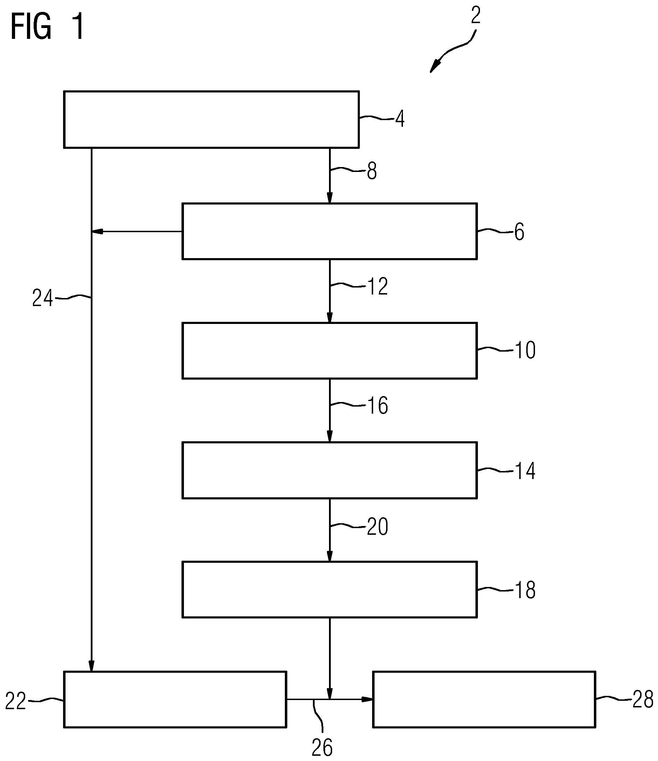

FIG 1 zeigt ein Flussdiagramm 2. In dem Flussdiagramm 2 wird ein Verfahren zum Zuordnen von Signalen zu verschiedenen Komponenten beschrieben, wobei sich die Signale in einem Datenstrang 4 überlagern.

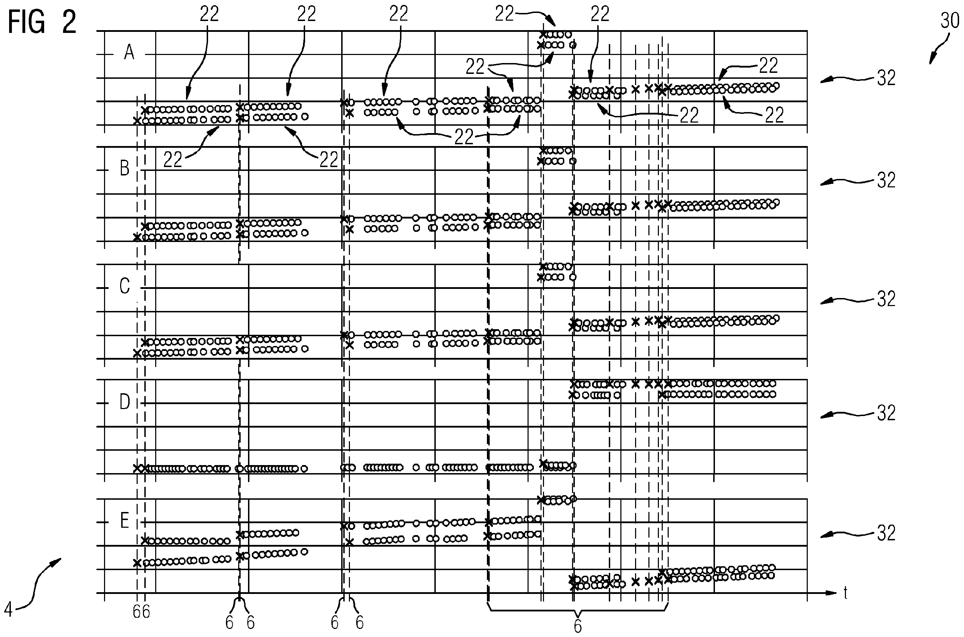

Ausgangspunkt ist also ein Datenstrang 4. Der Datenstrang 4 weist zumindest eine Datenreihe für eine Variable auf (vgl. FIG 2) .

Innerhalb des Datenstrangs 4 werden mehrere Änderungspunkte 6 ermittelt (Ermittlung 8). Als Änderungspunkt 6 kann ein Punkt aufgefasst werden, bei dem in dem Datenstrang 4 eine signifikante Änderung stattfindet.

Bei einem Änderungspunkt 6 kann sich beispielsweise ein Wert einer Variablen - insbesondere gegenüber einem vorhergehenden Wert dieser Variablen - um mehr als einen vorgegebenen zulässigen Maximaländerungswert geändert haben.

Weiter kann sich bei einem Änderungspunkt 6 beispielsweise ein Wert einer Variable pro Zeiteinheit - insbesondere gegenüber einem vorhergehenden Wert dieser Variable - um mehr als einen vorgegebenen zulässigen Maximaländerungswert pro Zeiteinheit geändert haben.

Bei der Ermittlung 8 der Änderungspunkte 6 werden Abweichungen von einem üblichen Verhalten der Variable ermittelt.

Weiter wird für jeden Änderungspunkt 6 jeweils ein Änderungsverhalten 10 ermittelt (Ermittlung 12).

Falls der Datenstrang 4 mehrere Datenreihen jeweils für eine Variable aufweist, kann zur Ermittlung 12 des Änderungsverhaltens 10 für jeden Änderungspunkt 6 jeweils ein Änderungsvektor bestimmt werden, welcher jeweils eine Änderung jeder Datenreihe an der jeweiligen Position im Datenstrang 4 beschreibt.

Falls der Datenstrang 4 nur eine Datenreihe für eine Variable aufweist, kann zur Ermittlung 12 des Änderungsverhaltens 10 für jeden Änderungspunkt 6 jeweils bestimmt werden, wie stark eine jeweilige Änderung der Datenreihe an der jeweiligen Position im Datenstrang 4 ist.

Diejenigen Änderungspunkte 6, bei welchen ein ähnliches Änderungsverhalten 10 ermittelt wird, werden jeweils einer gemeinsamen Gruppe 14 zugeordnet (Gruppierung 16). Die Zuordnung 16 zu den Gruppen 14 erfolgt beispielsweise mittels eines Clusteranalyseverfahrens.

Für jede Gruppe 14 von Änderungspunkten 6 wird jeweils ein Auslöser 18 für das jeweilige Änderungsverhalten 10 ermittelt (Ermittlung 20). Als Auslöser 18 für das jeweilige Änderungsverhalten 10 kann beispielswiese ein Umschalten zwischen den Komponenten, ein Austauschen zumindest einer der Komponenten, ein Rauschen einer der Komponenten und/oder ein Ausfall einer der Komponenten ermittelt werden.

Der Datenstrang 4 wird mittels der Änderungspunkte 6 in mehrere Abschnitte 22 unterteilt (Unterteilung 24). Unter Verwendung der ermittelten Auslöser 18 wird jeder Abschnitt 22 zwischen zwei Änderungspunkten 6 jeweils zu einer Komponente zugeordnet (Zuordnung 26), wobei die zu jeweils einer Komponente zugeordneten Abschnitte 22 jeweils ein Signal 28 bilden. Jedes Signal 28 ist jeweils einer Komponente zugeordnet.

Das Verfahren wird unter Verwendung eines Computerprogramms (nicht dargestellt) durchgeführt. Insbesondere ist das Computerprogramm zur Durchführung des Verfahrens eingerichtet.

FIG 2 zeigt ein Diagramm 30, in welchem beispielhaft ein Datenstrang 4 mit mehreren Datenreihen 32 dargestellt ist. In diesem Beispiel umfasst der Datenstrang 4 fünf Datenreihen 32. Jede Datenreihe 32 ist jeweils eine zeitabhängige Datenreihe 32 für jeweils eine Variable. Das heißt, dass jeder Datenpunkt einer jeweiligen Datenreihe einen Zeitwert und einen Variablenwert umfasst.

Die Datenreihen 32 des Datenstrangs 4 sind in FIG 2 untereinander über einer gemeinsamen Zeitachse t dargestellt. Die Datenreihen 32 sind alphabetisch mit A, B, C, D, E bezeichnet.

In diesem Beispiel sind jeweils zwei Komponenten zeitgleich im Einsatz. Im zeitlichen Verlauf kann jeder der Komponenten ausgetauscht werden. Die Komponenten sind Komponenten eines Schienenfahrzeugs (nicht dargestellt).

Die Komponenten übermitteln ihre Signale über einen gemeinsamen Bus. Auf diese Weise überlagern die Signale der Komponenten in dem gemeinsamen Datenstrang 4. Die Datenpunkte der überlagerten Signale sind in FIG 2 als Kreise (o) dargestellt.

Die Signale der mehreren Komponenten des Schienenfahrzeugs, die sich in dem Datenstrang 4 überlagern, können beispielsweise Sensormessgrößen wie Temperaturen und/oder Drücke beispielsweise von Antriebsgeräten des Schienenfahrzeugs umfassen. Weiter können die Signale der mehreren Komponenten des Schienenfahrzeugs, die sich in dem Datenstrang 4 überlagern, beispielsweise Stellgrößen wie Belüftungsstufen, Bremskraftvoreinstellungs-Stufen usw. sein. Ferner können die Signale der mehreren Komponenten des Schienenfahrzeugs, die sich in dem Datenstrang 4 überlagern, beispielsweise Lauf-Zeiten und/oder Lauf-Strecken von Kompressoren, Lüftern, Motoren, Klimaanagen, Trafos, Rädern, Stromabnehmern, Umrichtern o. Ä. sein. Weiter können die Signale der mehreren Komponenten des Schienenfahrzeugs, die sich in dem Datenstrang 4 überlagern, beispielsweise Schaltspiele von Ventilen, mechanischen Schaltern, elektrischen Sicherungen, Kompressoren, elektrischen Relais o. Ä. sein. Außerdem können die Signale der mehreren Komponenten des Schienenfahrzeugs, die sich in dem Datenstrang 4 überlagern, beispielsweise Zähler für Bewegungsvorgänge wie Stromabnehmer Heben, Ankoppeln von Fahrzeugen, Leitungstrennungen usw. sein.

Der Datenstrang 4 weist mehrere Abschnitte 22 auf, welche ausgehend von FIG 2 mehreren Komponenten zugeordnet werden.

Das Verfahren zum Zuordnen von Signalen zu verschiedenen Komponenten wird analog zu FIG 1 durchgeführt und ist im Folgenden beschrieben:
Die Datenreihen 32 können zunächst vorverarbeitet werden. Insbesondere können die Datenreihen 32 gefiltert werden.

Außerdem können die Datenreihen 32 unter Verwendung einer Abtastratenkonvertierung vereinheitlicht werden. Auf diese Weise können gleichlange Datenreihen 32, d. h. Datenreihen 32 mit gleich vielen Datenwerten, erzeugt werden.

Innerhalb des Datenstrangs 4 werden mehrere Änderungspunkte 6 ermittelt (Ermittlung 8). Bei der Ermittlung 8 der Änderungspunkte 6 werden Abweichungen von einem üblichen Verhalten der Variablen ermittelt.

Weiter wird für jeden Änderungspunkt 6 jeweils ein Änderungsverhalten 10 ermittelt (Ermittlung 12).

Zur Ermittlung 12 des Änderungsverhaltens 10 wird für jeden Änderungspunkt 6 jeweils ein Änderungsvektor bestimmt, welcher jeweils eine Änderung jeder Datenreihe an der jeweiligen Position im Datenstrang 4 beschreibt.

Dabei wird für jeden Änderungspunkt 6 jeweils bestimmt, wie stark eine jeweilige Änderung der jeweiligen Datenreihe 32 an der jeweiligen Position im Datenstrang 4 ist. Da jede Datenreihe jeweils eine Datenreihe 32 für jeweils eine Variable ist, wird für jeden Änderungspunkt 6 die jeweilige Abweichung von einem üblichen Verhalten der jeweiligen Variable ermittelt.

Ist eine Änderung einer Datenreihe 32 nicht signifikant, d. h. wird keine Abweichung von einem üblichen Verhalten der Variable ermittelt, dann ergibt sich als Vektoreintrag für den Änderungsvektor eine Null. Ist eine Änderung einer Datenreihe 32 dagegen signifikant, d. h. wird eine Abweichungen von einem üblichen Verhalten der Variable ermittelt, dann kann sich als Vektoreintrag für den Änderungsvektor die Höhe der Änderung oder die Höhe der Abweichung ergeben.

Diejenigen Datenpunkte bzw. Stellen, an denen jeweils eine Änderung einer Datenreihe 32 signifikant ist, d. h. an denen eine Abweichung von einem üblichen Verhalten der Variable ermittelt wird, sind in FIG 2 als Kreuze (X) eingezeichnet.

Es wird deutlich, dass für einen jeweiligen Änderungspunkt 6 zumindest in einigen der Datenreihen 32 eine signifikante Änderung festgestellt wird.

Der Datenstrang 4 wird mittels der Änderungspunkte 6 in mehrere Abschnitte 22 unterteilt. Ein Abschnitt 22 umfasst dabei alle Datenpunkte, die zwischen zwei Änderungspunkten 6 übermittelt wurden. Das heißt, dass ein Abschnitt 22 alle Datenpunkte aller Datenreihen 32 umfasst, die zwischen zwei Änderungspunkten 6 übermittelt wurden. Analog umfasst der letzte Abschnitt 22, der nach dem letzten Änderungspunkt 6 übermittelt wurde, alle Datenpunkte aller Datenreihen 32, die nach dem letzten Änderungspunkt 6 übermittelt wurden.

Im übermittelten Datenstrang 4 sind die Abschnitte 22 hintereinander angeordnet. Die Komponenten übermitteln abwechselnd, aber jeweils nacheinander ihre Daten über den Bus, sodass die Daten im übermittelten Datenstrang 4 hintereinander angeordnet sind. Allerdings übermittelt jede Komponente zeitabhängige Variablenwerte, d. h. jedem Variablenwert ist jeweils ein Zeitwert t zugeordnet. Der jeweilige Zeitwert t gibt die jeweilige Messzeit an und ist damit unabhängig vom Zeitpunkt der Übermittlung.

In dem Diagramm 30, in welchem der Datenstrang 4 bildlich dargestellt wurde, indem für jede Datenreihe 32 die Datenwerte über der Zeit t aufgetragen wurden, sind die Abschnitte 22 oftmals parallel zueinander angeordnet.

Diejenigen Änderungspunkte 6, bei welchen ein ähnliches Änderungsverhalten 10 ermittelt wird 12, werden jeweils einer gemeinsamen Gruppe 14 zugeordnet (Gruppierung 16). Die Zuordnung zu den Gruppen 14, d. h. die Gruppierung 16, erfolgt beispielsweise mittels eines Clusteranalyseverfahrens. Als Clusteranalyseverfahren kann beispielsweise DBSCAN verwendet werden.

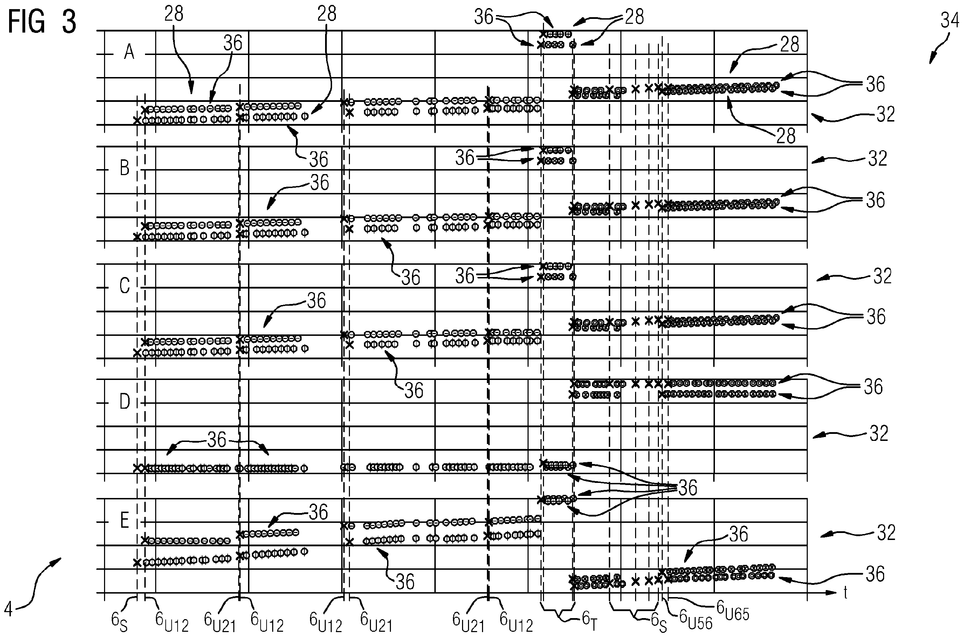

In diesem Beispiel können die Änderungspunkte 6 insgesamt drei Gruppen 14, nämlich den Gruppen S, T und U, zugeordnet werden (vgl. FIG 3)

FIG 3 zeigt ein Diagramm 34, in welchem der Datenstrang 4 aus FIG 2 dargestellt ist. In FIG 3 sind die Änderungspunkte 6 mehreren Gruppen 14 zugeordnet. In diesem Beispiel sind die Änderungspunkte 6 insgesamt drei Gruppen 14, nämlich den Gruppen S, T und U, zugeordnet. Die Zuordnung eines Änderungspunkts 6 zu einer Gruppe 14 ist in FIG 3 im Index des jeweiligen Änderungspunkts 6 vermerkt.

Die Anzahl an gleichzeitig verwendeten Komponenten kann vorgegeben, d. h. bekannt, sein. Weiter kann sich die Anzahl an gleichzeitig verwendeten Komponenten aus dem Datenstrang 4 und/oder aus der Gruppierung 16 ergeben.

Für jede Gruppe 14 von Änderungspunkten 6 wird jeweils ein Auslöser 18 für das jeweilige Änderungsverhalten ermittelt (Ermittlung 20). Als Auslöser 18 für das jeweilige Änderungsverhalten wird beispielswiese ermittelt (20):
Für die Änderungspunkte 6_{T} der Gruppe T: ein Austauschen zumindest einer der Komponenten.
Für die Änderungspunkte 6_{U} der Gruppe U: ein Umschalten zwischen den Komponenten.
Für die Änderungspunkte 6_{S} der Gruppe S: sonstige Änderungspunkte.

Die Änderungspunkte 6 der Gruppe T sind beispielsweise durch eine einmalige deutliche Änderung und eine geringe Wiederholrate gekennzeichnet.

Die Änderungspunkte 6 der Gruppe U sind beispielsweise durch eine hohe Wiederholrate gekennzeichnet.

Ferner sind die Änderungspunkte 6 der Gruppe S beispielsweise durch Änderungen gekennzeichnet, die sich eher selten wiederholen.

Für die Änderungspunkte 6_{U} der Gruppe U wird außerdem differenziert, von welcher Komponente zu welcher Komponente umgeschaltet wird. Wird beispielsweise von einer zweiten Komponente zu einer ersten Komponente umgeschaltet, so werden die Änderungspunkte mit 6_{U21} bezeichnet.

Ein Umschalten in eine bestimmte Richtung (beispielsweise von einer ersten Komponente zu einer zweiten Komponente) kann beispielsweise durch ein gleich bleibendes Vorzeichen und/oder durch eine jeweils sehr ähnliche Änderung gekennzeichnet sein.

Vier Änderungspunkte 6 wurden der Gruppe T zugeordnet. Das heißt, bei den vier Änderungspunkten 6_{T} wurde ein Austausch einer Komponente ermittelt.

Da jeweils zwei Komponenten zur gleichen Zeit betrieben werden, sind also im gesamten zeitlichen Verlauf sechs Komponenten im Einsatz.

Unter Verwendung der ermittelten Auslöser 18 wird jeder Abschnitt 22 zwischen zwei Änderungspunkten 6 jeweils zu einer Komponente zugeordnet.

Ist der Änderungspunkt 6 ein Änderungspunkt der Gruppe S, so wird dem Abschnitt 22 nach diesem Änderungspunkt 6s dieselbe Komponente zugeordnet wie vor diesem Änderungspunkt 6s.

Ist der Änderungspunkt 6 ein Änderungspunkt der Gruppe U, so wird dem Abschnitt 22 nach diesem Änderungspunkt 6_{U} eine andere Komponente zugeordnet als vor diesem Änderungspunkt 6u.

Ist der Änderungspunkt 6 ein Änderungspunkt der Gruppe T, so wird dem Abschnitt 22 nach diesem Änderungspunkt 6_{T} eine andere Komponente zugeordnet als vor diesem Änderungspunkt 6_{T}, wobei eine der vor diesem Änderungspunkt 6_{T} zugeordneten Komponente nicht mehr aktiv ist, d. h. im folgenden Verlauf nicht mehr zugeordnet wird.

Bei der Zuordnung der Abschnitte 22 zwischen den Änderungspunkten 6 zu den Komponenten kann eine Plausibilitätsprüfung erfolgen, bei welcher geprüft wird, ob das Umschalten zwischen den Komponenten plausibel ist.

Die Datenpunkte derjenigen Abschnitte 22, die jeweils zu einer Komponente zugeordnet werden, sind jeweils einheitlich dargestellt. Die Kreise (o), mittels welchen die Datenpunkte dargestellt sind, wurden hierzu im Inneren mit weiteren Zeichen (|, -, x, +, °, *) ergänzt. Alle Datenpunkte derjenigen Abschnitte 22, die jeweils zu einer Komponente zugeordnet wurden, sind jeweils als eine einheitliche Zeichenkombination dargestellt. Beispielsweise sind die Datenpunkte derjenigen Abschnitte 22, die zur ersten Komponente zugeordnet wurden, jeweils als Kreis mit einem vertikalen Strich (φ) dargestellt.

Die zu jeweils einer Komponente zugeordneten Abschnitte 22 bilden jeweils ein Signal 28.

Das heißt, dass beispielsweise alle als Kreis mit einem vertikalen Strich (φ) dargestellt Datenpunkte des Datenstrangs 4 das Signal 28 der ersten Komponente bilden.

Das Signal 28 einer jeweiligen Komponente wird ausgegeben.

Das Signal 28 einer jeweiligen Komponente kann als gesamtes ausgegeben werden. Weiter kann das Signal 28 einer jeweiligen Komponente als mehrere Teil-Signale 36 ausgegeben werden, wobei jedes Teil-Signal 36 die Daten einer der Variablen umfasst. Das heißt, dass für jede Variable jeder Komponente jeweils ein Teil-Signal 36 ausgegeben werden kann, wobei die Teil-Signale 36 einer jeweiligen Komponente jeweils das zu der jeweiligen Komponente zugeordnete Signal 28 bilden.

Vorzugsweise wird zumindest eines der Signale 28 zur Analyse eines Verhaltens der jeweiligen Komponente verwendet.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Zuordnen von Signalen (28) zu verschiedenen Komponenten, wobei sich die Signale (28) in einem Datenstrang (4) überlagern,
bei dem
- innerhalb des Datenstrangs (4) mehrere Änderungspunkte (6) ermittelt werden (8),
- für jeden Änderungspunkt (6) jeweils ein Änderungsverhalten (10) ermittelt wird (12),
- diejenigen Änderungspunkte (6), bei welchen ein ähnliches Änderungsverhalten (10) ermittelt wird, jeweils einer gemeinsamen Gruppe (14) zugeordnet werden (16),
- für jede Gruppe (14) von Änderungspunkten (6) jeweils ein Auslöser (18) für das jeweilige Änderungsverhalten (10) ermittelt wird (20) und
- der Datenstrang (4) mittels der Änderungspunkte (6) in mehrere Abschnitte (22) unterteilt wird (24), wobei unter Verwendung der ermittelten Auslöser (18) jeder Abschnitt (22) jeweils zu einer Komponente zugeordnet wird (26), wobei die zu jeweils einer Komponente zugeordneten Abschnitte (22) jeweils ein Signal (28) bilden.

2. Verfahren nach Anspruch 1,
**dadurch gekennzeichnet, dass**
der Datenstrang (4) zumindest eine Datenreihe (32) für eine Variable aufweist.

3. Verfahren nach Anspruch 2,
**dadurch gekennzeichnet, dass**
bei der Ermittlung (8) der Änderungspunkte (6) Abweichungen von einem üblichen Verhalten der Variable(n) ermittelt werden.

4. Verfahren nach einem der vorhergehenden Ansprüche,
**dadurch gekennzeichnet, dass**
als Auslöser (18) für das jeweilige Änderungsverhalten
- ein Umschalten zwischen den Komponenten, - ein Austauschen zumindest einer der Komponenten,
- ein Rauschen einer der Komponenten und/oder
- ein Ausfall einer der Komponenten ermittelt wird.

5. Verfahren nach Anspruch 4,
**dadurch gekennzeichnet, dass**
beim Umschalten zwischen den Komponenten als Auslöser (18) zumindest zwischen einem Umschalten von einer ersten der Komponenten zu einer zweiten der Komponenten und
einem Umschalten von der zweiten der Komponenten zu der ersten der Komponenten unterschieden wird.

6. Verfahren nach einem der vorhergehenden Ansprüche,
**dadurch gekennzeichnet, dass**
für jede Komponente das jeweilige Signal (28) ausgegeben wird.

7. Verfahren nach einem der vorhergehenden Ansprüche,
**dadurch gekennzeichnet, dass**,
der Datenstrang (4) mehrere Datenreihen (32) jeweils für eine Variable aufweist.

8. Verfahren nach Anspruch 7,
**dadurch gekennzeichnet, dass**,
vor der Ermittlung (8) der Änderungspunkte (6) ein jeweiliges Format der Datenreihen (32) unter Verwendung einer Abtastratenkonvertierung vereinheitlicht wird.

9. Verfahren nach Anspruch 7 oder 8,
**dadurch gekennzeichnet, dass**
zur Ermittlung (12) des Änderungsverhaltens (10) für jeden Änderungspunkt (6) jeweils ein Änderungsvektor bestimmt wird, welcher jeweils eine Änderung jeder Datenreihe (32) an der jeweiligen Position im Datenstrang (4) beschreibt.

10. Verfahren nach einem Ansprüche 7 bis 9,
**dadurch gekennzeichnet, dass**
für jede Variable jeder Komponente jeweils ein Teil-Signal (36) ausgegeben wird, wobei die Teil-Signale (36) einer jeweiligen Komponente jeweils das zu der jeweiligen Komponente zugeordnete Signal (28) bilden.

11. Verfahren nach einem der vorhergehenden Ansprüche,
**dadurch gekennzeichnet, dass**,
bei der Zuordnung der Abschnitte (22) zwischen den Änderungspunkten (6) zu den Komponenten eine Plausibilitätsprüfung erfolgt, bei welcher geprüft wird, ob ein Umschalten zwischen den Komponenten plausibel ist.

12. Verfahren nach einem der vorhergehenden Ansprüche,
**dadurch gekennzeichnet, dass**,
die Signale (28) der verschiedenen Komponenten Signale (28) mehrerer Komponenten eines Schienenfahrzeugs sind.

13. Computerprogramm mit Befehlen, welche, wenn das Computerprogramm auf einem Computer ausgeführt wird, diesen veranlasst, das Verfahren nach einem der Ansprüche 1 bis 12 auszuführen.

14. Computerlesbares Speichermedium mit Befehlen, welche, wenn sie durch einen Computer ausgeführt werden, diesen Computer veranlassen, das Verfahren nach einem der Ansprüche 1 bis 12 auszuführen.

## Claims

1. Method for assigning signals (28) to different components, wherein the signals (28) overlap in a data string (4), wherein
- a plurality of change points (6) are identified (8) within the data string (4),
- a respective change behaviour (10) is identified (12) for each change point (6),
- the change points (6) for which a similar change behaviour (10) is identified are each assigned (16) to a common group (14),
- a respective trigger (18) for the respective change behaviour (10) is identified (20) for each group (14) of change points (6), and
- the data string (4) is divided (24) into a plurality of sections (22) by means of the change points (6), wherein the identified triggers (18) are used to assign (26) each section (22) to a respective component, wherein the sections (22) assigned to a respective component form a respective signal (28).

2. Method according to Claim 1,
**characterized in that**
the data string (4) has at least one data series (32) for a variable.

3. Method according to Claim 2,
**characterized in that**
deviations from a usual behaviour of the one or more variables are identified during the identification (8) of the change points (6).

4. Method according to one of the preceding claims, **characterized in that**
- switching between the components,
- replacement of at least one of the components,
- noise at one of the components and/or
- failure of one of the components are identified as a trigger (18) for the respective change behaviour.

5. Method according to Claim 4,
**characterized in that**
if switching between the components is the trigger (18), a distinction is made at least between switching from a first one of the components to a second one of the components and switching from the second one of the components to the first one of the components.

6. Method according to one of the preceding claims,
**characterized in that**
the respective signal (28) is output for each component.

7. Method according to one of the preceding claims,
**characterized in that**
the data string (4) has a plurality of data series (32) for a respective variable.

8. Method according to Claim 7,
**characterized in that**
a respective format of the data series (32) is harmonized by means of sample-rate conversion prior to the identification (8) of the change points (6).

9. Method according to Claim 7 or 8,
**characterized in that**
a respective change vector is determined in order to identify (12) the change behaviour (10) for each change point (6), said change vector describing a respective change in each data series (32) at the respective position in the data string (4).

10. Method according to one of Claims 7 to 9,
**characterized in that**
a respective partial signal (36) is output for each variable of each component, wherein the partial signals (36) of a respective component form the respective signal (28) assigned to the respective component.

11. Method according to one of the preceding claims,
**characterized in that**
when the sections (22) between the change points (6) are assigned to the components, a plausibility check is carried out, which involves checking whether switching between the components is plausible.

12. Method according to one of the preceding claims,
**characterized in that**
the signals (28) of the various components are signals (28) of a plurality of components of a rail vehicle.

13. Computer program comprising instructions which, when the computer program is executed on a computer, cause said computer to carry out the method according to one of Claims 1 to 12.

14. Computer-readable storage medium comprising instructions which, when executed by a computer, cause said computer to carry out the method according to one of Claims 1 to 12.

## Revendications

1. Procédé d'association de signaux (28) à divers composants, les signaux (28) étant superposés dans une séquence (4) de données,
dans lequel
- à l'intérieur de la séquence (4) de données, on détermine (8) plusieurs points (6) de modification,
- pour chaque point (6) de modification, on détermine (12) respectivement un comportement (10) de modification,
- on associe (16) les points (6) de modification, pour lesquels on a déterminé un comportement (10) de modification semblable, respectivement à un groupe (14) commun,
- pour chaque groupe (14) de points (6) de modification, on détermine (20) respectivement un déclencheur (18) pour le comportement (10) de modification respectif et
- on subdivise (24) la séquence (4) de données au moyen des points (6) de modification en plusieurs tronçons (22), dans lequel en utilisant le déclencheur (18) déterminé, on associe (26) chaque tronçon (22) respectivement à un composant, les tronçons (22) associés respectivement à un composant formant respectivement un signal (28).

2. Procédé suivant la revendication 1,
**caractérisé en ce que**
la séquence (4) de données a au moins une rangée (32) de données pour une variable.

3. Procédé suivant la revendication 2,
**caractérisé en ce que**
lors de la détermination (8) des points (6) de modification, on détermine des écarts à un comportement habituel de la variable ou des variables.

4. Procédé suivant l'une des revendications précédentes,
**caractérisé en ce que**
on détermine comme déclencheur (18) pour le comportement de modification respective,
- un changement entre les composants,
- un remplacement d'au moins l'un des composants,
- un bruit de l'un des composants et/ou
- une défaillance de l'un des composants.

5. Procédé suivant la revendication 4,
**caractérisé en ce que**
lors d'un changement entre les composants comme déclencheur (18), on fait la différence entre au moins un changement d'un premier des composants à un deuxième des composants et un changement du deuxième des composants au premier des composants.

6. Procédé suivant l'une des revendications précédentes,
**caractérisé en ce que**
on émet pour chaque composant le signal (28) respectif.

7. Procédé suivant l'une des revendications précédentes, **caractérisé en ce que**
la séquence (4) de données a plusieurs rangées (32) de données respectivement pour une variable.

8. Procédé suivant la revendication 7,
**caractérisé en ce que**
avant la détermination (8) des points (6) de modification, on uniformise un format respectif des rangées (32) de données en utilisant un convertisseur de taux d'échantillonnage.

9. Procédé suivant la revendication 7 ou 8,
**caractérisé en ce que**
pour la détermination (12) du comportement (10) de modification, on détermine pour chaque point (6) de modification respectivement un vecteur de modification, qui décrit respectivement une modification de chaque rangée (32) de données à la position respective dans la séquence (4) de données.

10. Procédé suivant l'une des revendications 7 à 9,
**caractérisé en ce que**
pour chaque variable de chaque composant, on émet respectivement un signal (36) partiel, les signaux (36) partiels d'un composant respectif formant respectivement le signal (28) associé au composant respectif.

11. Procédé suivant l'une des revendications précédentes,
**caractérisé en ce que**
lors de l'association des tronçons (22) entre les points (6) de modification au composant, on effectue un contrôle de vraisemblance, dans lequel on contrôle si un changement entre les composants est vraisemblable.

12. Procédé suivant l'une des revendications précédentes,
**caractérisé en ce que**
les signaux (28) des divers composants sont des signaux (28) de plusieurs composants d'un véhicule ferroviaire.

13. Programme d'ordinateur ayant des instructions, qui, lorsque le programme d'ordinateur est réalisé sur un ordinateur, font que celui-ci effectue le procédé suivant l'une des revendications 1 à 12.

14. Support de mémoire déchiffrable par ordinateur ayant des instructions, qui, lorsqu'elles sont exécutées par un ordinateur font que l'ordinateur effectue le procédé suivant l'une des revendications 1 à 12.
